# EUROPÄISCHE PATENTSCHRIFT

(11) **EP 0 330 644 B1**
(45) Veröffentlichungstag und Bekanntmachung des Hinweises auf die Patenterteilung: **24.02.1993**
(21) Anmeldenummer: 89890010.5
(22) Anmeldetag: 12.01.1989
(51) Int. Cl.: B60C 11/11, B60C 11/12

(54) **Laufflächenprofil für einen Fahrzeugluftreifen**
Tread pattern for a vehicle tyre
Profil de la bande de roulement d'un pneumatique pour véhicules

(30) Priorität: 24.02.1988 AT 457/88
(43) Veröffentlichungstag der Anmeldung: 30.08.1989
(73) Patentinhaber: Semperit Reifen Aktiengesellschaft, A-2514 Traiskirchen (AT)
(72) Erfinder: Diensthuber, Franz, A-2544 Schönau (AT)
(74) Vertreter: Vinazzer, Edith

(56) Entgegenhaltungen:
- DE-A- 1 261 419
- DE-U- 8 620 979
- LU-A- 82 226
- GUMMIBEREIFUNG, Band 64, Nr. 11, November 1988, Seiten 22-23, Bielefedld, DE; "Der neue Semperit "Direction-Grip" - Mit breiten Spuren durch den Schnee"

## Beschreibung

Die Erfindung betrifft ein Laufflächenprofilfüreinen Fahrzeugluftreifen, insbesondere für den Wintereinsatz, mit Profilelementen, wie Blöcke oder Rippen, die durch in Umfangsrichtung voneinander beabstandete Feineinschnitte in Block- bzw. Rippenelemente gegliedert sind, die jeweils durch mindestens einen zumindest im wesentlichen im Umfangsrichtung verlaufenden zusätzlichen Einschnitt geteilt sind, wobei die einander zugewandten Enden der in unmittelbar benachbarten Block- bzw. Rippenelementen angeordneten zusätzlichen Einschnitte miteinander nicht fluchten.

Ein derartiges Laufflächenprofil ist aus der DE-B-1261419 bekannt. Dieses Profil besteht aus sechs Umfangsrippen, von welchen die in jeder Laufflächenhälfte etwa in der Mitte angeordneten Rippen je aus zwei paarweise zusammengehörigen Blockreihen bestehen, die sich aus ineinander geschachtelten ausgeprägt V-förmigen Blöcken züsammensetzen. Diese V-förmigen Blöcke sind durch Feineinschnitte voneinander getrennt.

Bei Fahrzeugluftreifen mit Laufflächenprofilen für den Einsatz unter winterlichen Fahrbedingungen hat sich gegenüber der in früheren Jahren weit verbreiteten Ausgestaltung mit grobstolligen und grobstrukturierten Laufflächenprofilen die nun allgemein bekannte "Lamellentechnik" durchgesetzt. Durch diese Lamellentechnik, das heißt das Teilen von Profilelementen durch sehr schmale Feineinschnitte in Querrichtung, konnte eine wesentliche Verbesserung der Wintertauglichkeit, also insbesondere was Naßgriff, Eisgriff oder Schneegriff betrifft, erzielt werden. Auch aus der Patentliteratur sind Laufflächenprofile dieser Art, beispielsweise aus der DE-OS 3028112, bereits bekannt.

Bei der Weiterentwicklung derartiger Laufflächenprofile steht nun im Vordergrund, den fortwährend höheren Anforderungen gerecht zu werden. Hiebei sollen die oben genannten Eigenschaften, wie Naßgriff, Eisgriff, Schneegriff, noch weiter verbessert werden, aber auch die Geräuschentwicklung der Reifen im Fahrbetrieb vermindert und das Fahrverhalten verbessert werden.

Die Erfindung hat sich nun die Aufgabe gestellt, ein Laufflächenprofil dereingangs genannten Art hinsichtlich einer Verbesserung bzw. Optimierung der genannten Eigenschaften weiterzuentwicklen.

Gelöst wird die gestellte Aufgabe erfindungsgemäß dadurch, daß sämtliche innerhalb der Laufflächenbreite angeordneten Profilelemente durch die im wesentlichen in Profilquerrichtung verlaufenden Feineinschnitte in Block- bzw. Rippenelemente gegliedert sind, die ihrerseits sämtlich durch zumindest je einen der zusätzlichen Einschnitte geteilt sind.

Durch die erfindungsgemäßen Maßnahmen wird ein Laufflächenprofil geschaffen, welches im Naßgriff, Eisgriff und Schneegriff gegenüber den bekannten Ausführungen signifikant verbessert ist. Umfangreiche Versuche und Tests haben ergeben, daß die gemessenen und beobachteten Werte hinsichtlich der gennanten Eigenschaften um bis zu 30 % verbesserbar sind. Dies läßt sich insbesondere dadurch erklären, daß die zusätzlichen Einschnitte in den Block- bzw. Rippenelementen ein zusätzliches Auffächern und Relativbewegungen in einem relativ kleinen Bereich zulassen, die eine sehr gute Anpassung der Lauffläche an die jeweilige Beschaffenheit des Untergrundes, ob Schnee, Eis, nasse oder trockene Fahrbahn, insbesondere auch an die Oberflächenrauhigkeit, bewirkt. Diesbezüglich ist die nichtfluchtende Anordnung der Einschnitte innerhalb der Blöcke bzw. Rippen wesentlich, da die gegenseitige Abstützung der einzelnen Blockelemente bzw. Rippenelemente die Anpassung an sehr kleine Strukturunterschiede im Untergrund gestattet. Auch hat sich weiters gezeigt, daß die Einschnitte zur Verminderung der Geräuschentwicklung nicht unwesentlich beitragen und sich positiv auf das Fahrverhalten auswirken.

Gemäß einer Ausführungsform der Erfindung sind die Einschnitte gegenüber der Umfangsmittellinie der Lauffläche schräg gestellt angeordnet.

Es hat sich weiters als günstig erwiesen, wenn pro Blockelement bzw. Rippenelement ein einziger Einschnitt vorgesehen wird. Zur Begünstigung einer gewissen Gleichmäßigkeit der Beweglichkeit der einzelnen Block- und Rippenelemente ist es von Vorteil, wenn die Einschnitte im mittleren Drittel der Block- bzw. Rippenelemente angeordnet sind.

Es ist ferner vorteilhaft, wenn die Einschnitte unter einem rechten oder im wesentlichen rechten Winkel in die Feineinschnitte einmünden. Diese Maßnahme wirkt sich positiv auf einen gleichmäßigen Abrieb der Lauffläche aus.

Die Einschnitte sollten eine Tiefe von mindestens 1,5 mm aufweisen. Ein gleichmäßiger Abrieb kann dadurch unterstützt werden, daß im Laufflächenmittelbereich Einschnitte vorgesehen werden, deren Tiefe geringer ist, als jene der Einschnitte in den Seitenbereichen.

Auch die Breite der Einschnitte wirkt sich auf die erzielbare Eigenschaftsverbesserung aus. Diesbezüglich ist es günstig, wenn die Einschnitte eine Breite von 0,7 bis 1,5 mm, bevorzugt 1 mm, aufweisen.

Weitere Merkmale, Vorteile und Einzelheiten der Erfindung werden nun anhand der Zeichnung, die zwei Ausführungsbeispiel des erfindungsgemäßen Laufflächenprofiles darstellt, näher beschrieben. Hiebei ist in den beiden Zeichnungsfiguren jeweils eine Draufsicht auf eine Teilabwicklung einer Lauffläche eines Fahrzeugluftreifens dargestellt.

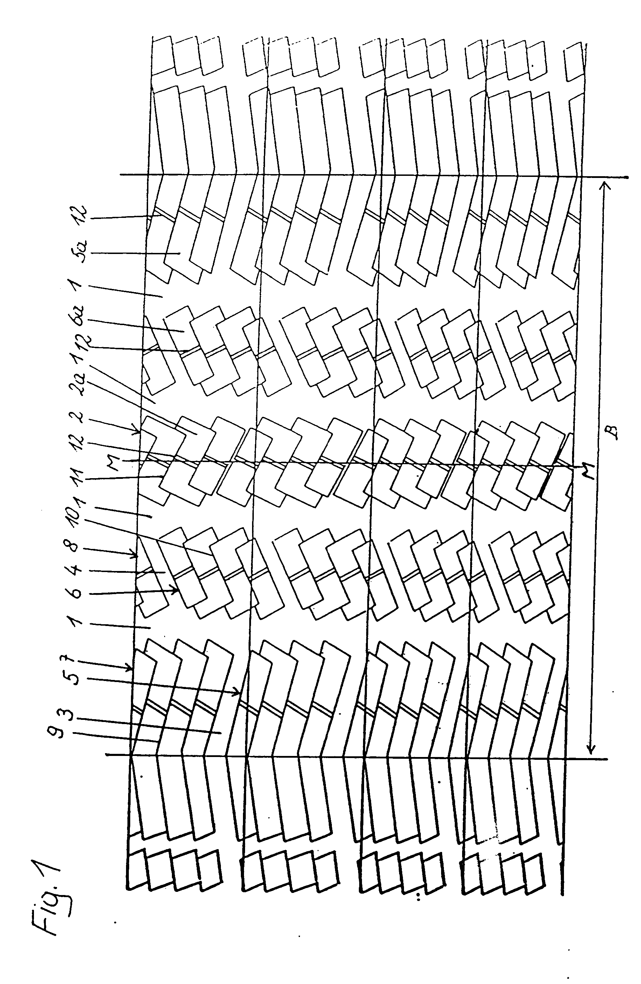

Die in den Zeichnungsfiguren dargestellten Laufflächenprofile sind insbesondere für PKW Winterreifen geeignet. In der nun folgenden Beschreibung wird jeweils das Profil über die Breite B betrachtet, wobei B der größten axialen Breite in der Bodenaufstandsfläche entspricht. Das Laufflächenprofil gemäß Fig. 1 weist vier in Umfangsrichtung verlaufende und im wesentlichen gerade ausgebildete Umfangsnuten 1 auf. Entlang der Mittellinie M-M ist eine kontinuierlich umlaufende Rippe 2 angeordnet, seitlich der Rippe 2 sind in jeder Laufflächenhälfte durch das Vorsehen von Quernuten 3, 4 aus Blöcken 5, 6 bestehende Blockreihen 7, 8 gebildet. Die im wesentlichen als gerade Nuten ausgebildete Quernuten 3,4 verlaufen im vorliegenden Ausführungsbeispiel unter einem Winkel ungleich 90° zur Mittellinie M-M.

Sowohl die Rippe 2 als auch die Blöcke 5, 6 sind mit einer Anzahl von über die Blockbreite bzw. die Rippenbreite durchgehenden Feineinschnitten 9, 10, 11 versehen. In den Blockreihen 7, 8 sind die Feineinschnitte 9, 10 gegenüber der Mittellinie M-M im wesentlichen ebenso geneigt wie die Quernuten 3, 4. Auch die in der Rippe 2 angeordneten Feineinschnitte 11 sind gegenüber der Mittellinie M-M geneigt angeordnet. Die Feineinschnitte 9, 10, 11 weisen eine Breite -- 1 mm auf und teilen die Blöcke 5, bzw. die Rippe 2 in eine Anzahl von Blockelementen 5a, 6a bzw. Rippenelementen 2a.

Die Blockelemente 5a, 6a und die Rippenelemente 2a sind durch Einschnitte 12 in Querrichtung geteilt. Die Breite der Einschnitte 12 beträgt 0,7 bis 1,5 mm, bevorzugt ca. 1 mm. Die Einschnitte 12 sind im Mittelbereich, bevorzugt etwa im mittleren Drittel der Blockelemente 5a, 6a und der Rippenelemente 2a vorgesehen. Die Anordnung bezüglich angrenzender Blockelemente 5a, 6a bzw. Rippenelemente 2a wird jedenfalls so getroffen, daß die Einschnitte 12 miteinander nicht fluchten. Wie im vorliegenden Ausführungsbeispiel dargestellt, kann das dadurch erfolgen, daß die einzelnen Einschnitte 12 unter einem Winkel zur Mittellinie M-M verlaufend angeordnet werden, wobei innerhalb der einzelnen Blockreihen 7, 8 bzw. innerhalb der Rippe 2 jeweils ein und derselbe Neigungswinkel für die Einschnitte 12 gewählt wird. Weiters ist es günstig, wenn die Schrägstellung in den einzelnen Blöcken 5, 6 bzw. in der Rippe 2 entgegengesetzt zur Schrägstellung der Feineinschnitte 9, 10, 11 bzw. der Quernuten 3, 4 gewählt wird. Bevorzugt wird als Einmündungswinkel der Einschnitte 12 in die Quernuten 3, 4 bzw. die Feineinschnitte 9, 10, 11 ein rechter Winkel bzw. ein von diesem eher geringfügig abweichender gewählt werden.

Die Tiefe der Einschnitte 12 sollte mindestens 1,5 bis 2,5 mm betragen. Selbstverständlich kann die Tiefe der Einschnitte 12 auch der sonstigen Profiltiefe entsprechen. Zur Erzielung eines gleichmäßigen Abriebbildes kann es hiebei von Vorteil sein, wenn im Laufflächenmittelbereich die Tiefe der Einschnitte 12 geringer ist als in den Laufflächenseitenbereichen.

Je nach sonstiger Profilausgestaltung, ist es nicht unbedingt erforderlich oder zweckmäßig, die Einschnitte gegenüber der Mittellinie M-M schräg zu stellen. Wesentlich ist jedoch, daß wie erwähnt, bei benachbarten Blockelementen bzw. Rippenelementen keine fluchtende Anordnung der Einschnitte getroffen wird.

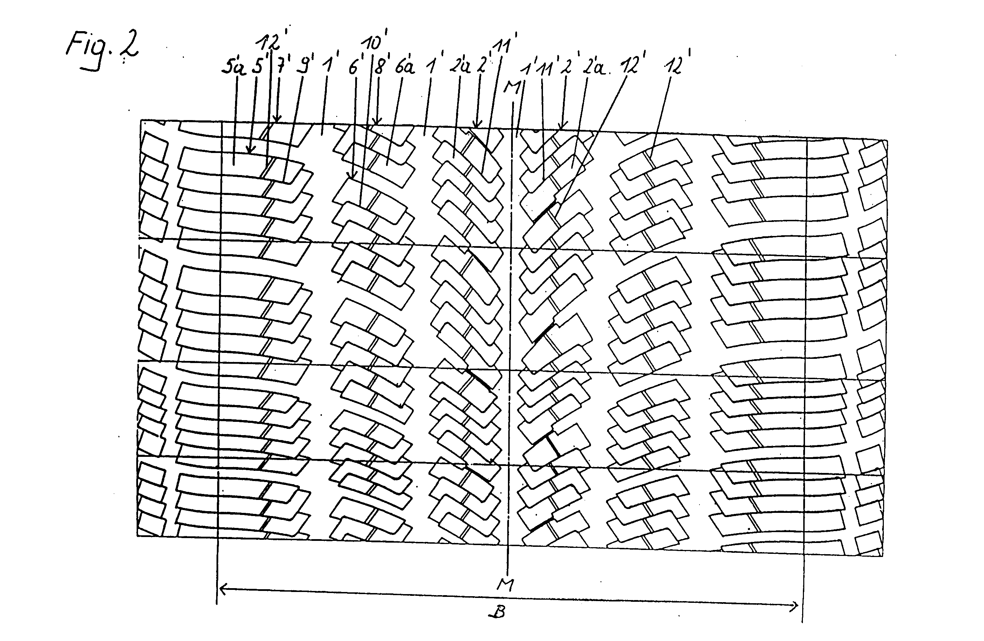

Beim Ausführungsbeispiel gemäß Fig. 2 sind fünf Umfangsnuten 1' vorgesehen, von welchen eine entlang der Mittellinie M-M verläuft. Das drehrichtungsabhängig ausgestaltete Laufflächenprofil ist relativ ähnlich zum Laufflächenprofil gemäß Fig. 1 ausgebildet, beidseitig der Mittellinie M-M ist jedoch je eine Rippe 2' vorgesehen, an die zum Laufflächenrand zu jeweils zwei Blockreihen 7', 8' anschließen. Sowohl die Rippen 2 als auch die Blöcke 5', 6' sind mit Feineinschnitten 9', 10', 11' versehen. Die dadurch gebildeten Blockelemente 5'a, 6'a und Rippenelemente 2'a sind wiederum durch Einschnitte 12' in Querrichtung geteilt.

Die Erfindung ist auf die dargestellten Ausführungsbeispiele nicht eingeschränkt. Es wird etwa darauf hingewiesen, daß weder die Feineinschnitte noch die zusätzlichen Einschnitte einen geraden Verlauf aufweisen müssen. Je nach Profilgestaltung kann es auch zweckmäßig sein, mehr als einen Einschnitt pro Block-oder Rippenelement vorzusehen.

## Patentansprüche

1. Laufflächenprofil für einen Fahrzeugluftreifen, insbesondere für den Wintereinsatz, mit Profilementen, wie Blöcke oder Rippen, die durch in Umfangsrichtung voneinander beabstandete Feineinschnitte (9,9',10,10',11,11') in Block- bzw. Rippenelemente (2a, 5a, 6a; 2'a, 5'a, 6'a) gegliedert sind, die jeweils durch mindestens einen zumindest im wesentlichen in Umfangsrichtung verlaufenden zusätzlichen Einschnitt (12, 12') geteilt sind, wobei die einander zugewandten Enden der in unmittelbar benachbarten Block- bzw. Rippenelementen (2a, 5a, 6a; 2'a, 5'a, 6'a) angeordneten Einschnitte (12, 12') miteinander nicht fluchten, dadurch gekennzeichnet, daß sämtliche innerhalb der Laufflächenbreite (B) angeordneten Profilelemente durch die im wesentlichen in Profilquerrichtung verlaufenden Feineinschnitte (9,9',10,10',11,11') in Block- bzw. Rippenelemente (2a, 5a, 6a; 2'a, 5'a, 6'a) gegliedert sind, die ihrerseits sämtlich durch zumindest je einen der zusätzlichen Einschnitte (12, 12') geteilt sind.

2. Laufflächenprofil nach Anspruch 1, dadurch gekennzeichnet, daß die zusätzlichen Einschnitte (12,12') gegenüber der Umfangsmittellinie (M-M) der Lauffläche schräg gestellt angeordnet sind.

3. Laufflächenprofil nach Anspruch 1 oder 2, dadurch gekennzeichnet, daß pro Blockelement (5a, 5'a, 6a, 6'a) bzw. Rippenelement (2a, 2'a) ein einziger zusätz!!cher Einschnitt (12,12') vorgesehen ist.

4. Laufflächenprofil nach einem der Ansprüche 1 bis 3, dadurch gekennzeichnet, daß die zusätzlichen Einschnitte (12, 12') im mittleren Drittel der Block- bzw. Rippenelemente (2a, 2'a, 5a, 5'a, 6a, 6'a) angeordnet sind.

5. Laufflächenprofil nach einem der Ansprüche 1 bis 4, dadurch gekennzeichnet, daß die zusätzlichen Einschnitte (12, 12') unter einem rechten oder im wesentlichen rechten Winkel in die Feineinschnitte (9, 9', 10, 10', 11, 11') einmünden.

6. Laufflächenprofil nach einem der Ansprüche 1 bis 5, dadurch gekennzeichnet, daß die Tiefe der zusätzlichen Einschnitte (12,12') mindestens 1,5 mm beträgt.

7. Laufflächenprofil nach einem der Ansprüche 1 bis 6, dadurch gekennzeichnet, daß im Laufflächenmittelbereich zusätzliche Einschnitte (12, 12') vorgesehen werden, deren Tiefe geringer ist, als jene der zusätzlichen Einschnitte (12, 12') in den Seitenbereichen.

8. Laufflächenprofil nach einem der Ansprüche 1 bis 7, dadurch gekennzeichnet, daß die zusätzlichen Einschnitte (12) eine Breite von 0,7 bis 1,5 mm, bevorzugt 1 mm, aufweisen.

## Claims

1. Tread surface profile for a pneumatic vehicle tyre, more especially for winter use, having profile elements, such as blocks or ribs, which are divided into respective block or rib elements (2a, 5a, 6a; 2'a, 5'a, 6'a) by means of fine incisions (9, 9', 10, 10', 11, 11'), which are spaced from one another in the circumferential direction, said rib elements being each separated by means of at least one additional incision (12,12'), which extends at least substantially in the circumferential direction, the ends facing one another of the incisions (12, 12'), which are disposed in directly adjacent block or rib elements (2a, 5a, 6a; 2'a, 5'a, 6'a), not being in alignment with one another, characterised in that all of the profile elements, which are disposed internally of the tread surface width (B), are divided into respective block or rib elements (2a, 5a, 6a; 2'a, 5'a, 6'a) by means of the fine incisions (9, 9', 10, 10', 11, 11'), which extend substantially in the transverse direction of the profile, all of said block or rib elements in turn being separated by means of at least one of the additional incisions (12, 12').

2. Tread surface profile according to claim 1, characterised in that the additional incisions (12,12') are disposed in an inclined manner relative to the circumferential centre line (M-M).

3. Tread surface profile according to claim 1 or 2, characterised in that one single additional incision (12, 12') is provided per block element (5a, 5'a, 6a, 6'a) or rib element (2a, 2'a).

4. Tread surface profile according to one of claims 1 to 3, characterised in that the additional incisions (12,12') are disposed in the central third of the block or rib elements (2a, 2'a, 5a, 5'a, 6a, 6'a).

5. Tread surface profile according to one of claims 1 to 4, characterised in that the additional incisions (12, 12') extend into the fine incisions (9, 9', 10,10', 11, 11') at a right angle or substantially at a right angle.

6. Tread surface profile according to one of claims 1 to 5, characterised in that the depth of the additional incisions (12, 12') is at least 1.5 mm.

7. Tread surface profile according to one of claims 1 to 6, characterised in that additional incisions (12,12') are provided in the central region of the tread surface, the depth of said additional incisions being smaller than the depth of the additional incisions (12, 12') in the lateral regions.

8. Tread surface profile according to one of claims 1 to 7, characterised in that the additional incisions (12) have a width of from 0.7 to 1.5 mm, preferably 1 mm.

## Revendications

1. Profil de la bande de roulement d'un pneumatique pour véhicules, notamment pour son utilisation en hiver, comprenant des éléments de profil tels que des blocs ou des nervures, qui sont subdivisés en éléments de blocs ou de nervures (2a, 5a, 6a; 2'a, 5'a, 6'a) par de fines entailles (9, 9',10, 10', 11, 11') espacées les unes des autres en direction périphérique, qui sont partagés respectivement par au moins une entaille additionnelle (12, 12') orientée essentiellement en direction périphérique, les extrémités tournées les unes vers les autres des entailles additionnelles (12, 12') prévues dans les éléments de blocs ou de nervures immédiatement voisins (2a, 5a, 6a; 2'a, 5'a, 6'a) n'étant pas en alignement mutuel, caractérisé en ce que tous les éléments de profil disposés sur la largeur de la bande de roulement sont subdivisés en éléments de blocs ou de nervures (2a, 5a, 6a; 2'a, 5'a, 6'a) par les fines entailles (9, 9',10, 10', 11, 11') qui sont orientées sensiblement en direction transversale du profil, et sont eux-mêmes partagés par au moins une des entailles additionnelles (12, 12').

2. Profil de bande de roulement selon la revendication 1, caractérisé en ce que les entailles additionnelles (12,12') sont disposées en oblique par rapport à la ligne périphérique centrale (MM) de la bande de roulement.

3. Profil de bande de roulement selon la revendication 1 ou 2, caractérisé en ce qu'il est prévu une unique entaille additionnelle (12, 12') pour chaque élément de bloc (5a, 5'a, 6a, 6'a).

4. Profil de bande de roulement selon l'une des revendications 1 à 3, caractérisé en ce que les entailles additionnelles (12, 12') sont disposées dans le tiers central des éléments de blocs ou de nervures (2a, 5a, 6a; 2'a, 5'a, 6'a).

5. Profil de bande de roulement selon l'une des revendications 1 à 4, caractérisé en ce que les entailles additionnelles (12,12') forment avec les fines entailles (9, 9',10, 10', 11,11') un angle droit ou sensiblement droit.

6. Profil de bande de roulement selon l'une des revendications 1 à 5, caractérisé en ce que la profondeur des entailles additionnelles (12, 12') est d'au moins 1,5 mm.

7. Profil de bande de roulement selon l'une des revendications 1 à 6, caractérisé en ce que sont prévues dans la région centrale de la bande de roulement des entailles additionnelles (12, 12') dont la profondeur est inférieure à celle des entailles additionnelles (12,12') des régions latérales.

8. Profil de bande de roulement selon l'une des revendications 1 à 7, caractérisé en ce que les entailles additionnelles (12, 12') ont une largeur de 0,7 à 1,5 mm, et de préférence de 1 mm.
